(19) **Europäisches Patentamt / European Patent Office / Office européen des brevets**

(11) **EP 3 001 668 A1**

(12) **EUROPEAN PATENT APPLICATION**

(43) Date of publication:
**30.03.2016 Bulletin 2016/13**

(51) Int Cl.:
***H04N 1/60*** *(2006.01)*

(21) Application number: **14306471.5**

(22) Date of filing: **24.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
  **92130 Issy-les-Moulineaux (FR)**
• **CENTRE NATIONAL DE LA RECHERCHE SCIENTIFIQUE -CNRS-**
  **75794 Paris Cedex 16 (FR)**
• **Université Jean Monnet de Saint-Etienne**
  **42023 Saint-Etienne Cedex 2 (FR)**

(72) Inventors:
• **Sheikh Faridul, Hasan**
  **35576 CESSON-SÉVIGNÉ (FR)**
• **Stauder, Jurgen**
  **35576 CESSON-SÉVIGNÉ (FR)**
• **Serré, Catherine**
  **35576 CESSON-SÉVIGNÉ (FR)**
• **Tremeau, Alain**
  **42000 SAINT-ETIENNE (FR)**

(74) Representative: **Browaeys, Jean-Philippe Technicolor**
  **1, rue Jeanne d'Arc**
  **92443 Issy-les-Moulineaux (FR)**

(54) **Method for compensating for color differences between different images of a same scene**

(57)    The method comprises the steps of:
- for each combination of a first and second illuminants, applying its corresponding chromatic adaptation matrix to the colors of a first image to compensate such as to obtain chromatic adapted colors forming a chromatic adapted image and calculating the difference between the colors of a second image and the chromatic adapted colors of this chromatic adapted image,
- retaining the combination of first and second illuminants for which the corresponding calculated difference is the smallest,
- compensating said color differences by applying the chromatic adaptation matrix corresponding to said retained combination to the colors of said first image.

Fig.1

EP 3 001 668 A1

**Description**

Technical Field

The invention concerns a method and a system for robust color mapping that explicitly takes care of change of illuminants by chromatic adaption based illuminant mapping.

Background Art

Many applications such as stereo imaging, multiple-view stereo, image stitching, photorealistic texture mapping or color correction in feature film production, face the problem of color differences between images showing semantically common content. Possible reasons include: uncalibrated cameras, different camera settings, change of lighting conditions, and differences between different film production workflows. Color mapping is a method that models such color differences between different views of a same scene to allow the compensation of their color differences.

Color mapping may be notably based on: geometrical matching of corresponding features between the different views, computing color correspondences between the colors of those different views from those matched features and finally calculating a color mapping function from these computed color correspondences.

Color mapping is then able to compensate color differences between images or views. These images or views of a particular scene can be taken from a same viewpoint or from different viewpoints, under a same or different illumination conditions. Moreover, different imaging devices (smartphone vs. professional camera) with different device settings can also be used to capture these images or views.

Both dense and sparse geometric feature matching methods are reported in the literature to be used to calculate color correspondences, such that each color correspondence comprises two corresponding colors, one from one view, and another from another view of the same scene, and such that corresponding colors of a color correspondence belong generally to the same semantic element of the scene, for instance the same object or the same part of this object. Geometric feature matching algorithms usually match either isolated features (then, related to "feature matching") or image regions from one view with features or image regions with another view. Features are generally small semantic elements of the scene and feature matching aims to find the same element in different views. An image region represents generally a larger, semantic part of a scene. Color correspondences are usually derived from these matched features or matched regions. It is assumed that color correspondences collected from matched features and regions represent generally all colors of the views of the scene.

In the specific framework of stereo imaging, 3D video content are usually created, processed and reproduced on a 3D capable screen or stereoscopic display device. Processing of 3D video content allows generally to enhance 3D information (for example disparity estimation) or to enhance 2D images using 3D information (for example view interpolation). Generally, 3D video content is created from two (or more) 2D videos captured under different viewpoints. By relating these two (or more) 2D views of the same scene in a geometrical manner, 3D information about the scene can be extracted.

Between different views or images of a same scene, geometrical difference but also color difference occurs. For example, a scene can be acquired under two different illumination conditions, illum1 and illum2, and two different viewpoints, viewpoint1 and viewpoint2. Under the viewpoint1 and the illuminant illum1, a first image Img1 is captured. Next, under the viewpoint2 and the same illuminant illum1, a second image Img2 is captured. We assume that the camera and the settings of the second acquisition are identical to the camera and the settings of the first acquisition. As Img1 and Img2 are taken under the same illumination condition, illum1, and as they represent the same scene, their colors are generally consistent, at least for non occluded scene parts and assuming Lambertian reflection, even if the two viewpoints are different. That means that the different features of the scene should have the same color in both images Img1 and Img2, although there may be geometric differences. Then, a third image Img3 is acquired under the same viewpoint as for the second image, viewpoint2, but under another illuminant illum2. As Img1 and Img3 are taken under different illumination conditions, illum1 vs. illum2, the colors of at least some features of the scene are different in Img1 and in Img3, and also there may be geometric differences.

In general, the human eye chromatically adapts to a scene and to its illuminant, this phenomenon being known as "chromatic adaptation". Chromatic adaptation is the ability of the human visual system to discount the colour of the illumination to approximately preserve the appearance of an object in a scene. It can be explained as independent sensitivity regulation of the three cone responses of the human eye. This chromatic adaptation means that, when looking to a scene illuminated by a first illuminant, the human visual system adapts itself to this first illuminant, and that, when looking to the same scene illuminated under a second illuminant different from the first one, the human visual system adapts itself to this second illuminant. According to this known chromatic adaptation principle of the human eye, in between these two chromatic adaptation states, the human eye perceives different colors when looking to a same scene.

It is common to use the LMS color space when performing a chromatic adaptation of the color of an object of a scene as perceived by the human eye under a first illuminant to the color of the same sample object as perceived by the human eye under a second illuminant different from the first one, i.e. estimating the appearance of a color sample for the human eye under a different illuminant. The LMS color space is generally used for such a chromatic adaptation. LMS is a color space in which the responses of the three types of cones of the human eye are represented, named after their responsivity (sensitivity) at long (L), medium (M) and short (S) wavelengths.

More precisely, for the chromatic adaptation of a color, the XYZ tristimulus values representing this color in the XYZ color space as perceived under a first illuminant (by a standard CIE observer) are converted to LMS tristimulus values representing the same color in the well-known "spectrally sharpened" CAT02 LMS space to prepare for color adaptation. "CAT" means "Color Adaptation Transform". "Spectral sharpening" is the transformation of the tristimulus values of a color into new values that would have resulted from a sharper, more concentrated set of spectral sensitivities, for example of three basic color sensors of the human eye. Such a spectral sharpening is known for aiding color constancy, especially in the blue region. Applying such a spectral sharpening means that the tristimulus values of a color are generated in this CAT02 LMS color space from spectral sensitivities of eye sensors that spectrally overlap as less as possible, preferably that do not overlap at all such as to get the smallest correlation between the three tristimulus values of this color.

Then, in this CAT02 LMS space, the chromatic adaptation of colors can be performed using a **chromatic adaptation matrix** which is precalculated to adapt, into this color space, the color of a sample object as perceived under a first illuminant into a color of the same sample object as perceived under a second illuminant. A chromatic adaptation matrix is then specific to a pair of illuminants. To calculate such matrices, the color appearance model CMCCAT1997 or CMCCAT2000 can be used. When using the color appearance model CMCCAT1997, the so-called "Bradford transformation matrix" is generally used.

Having then obtained the LMS tristimulus values representing the color of the sample object as perceived under the second illuminant, the corresponding XYZ tristimulus values representing this color in the XYZ color space can be obtained by using the inverse of the color transformation above.

Besides changing illumination conditions of a scene, there are others reasons for color differences such as change in shutter speed, change in white balancing of the camera, causing change of white temperature, change of illumination intensity, change of illumination spectrum, etc.

In the patent application US2003/164828 (KONIKA), a method is proposed to transform colors in a photograph acquired under a first illuminant into colors of a photograph such as acquired under a standard illuminant, by using measurement of color chips. This method might compensate the color differences between two images if the two images show the same scene under different illuminants. The method relies on the presence of objects with known colors in the scene ("color chips"). The patent US7362357 proposes a related method of estimating the illuminant of the scene relying on the presence of objects with known color in the scene ("color standards").

The patent US7068840B2 (KODAK) allows calculating the illuminant of a scene from an image of this scene. In the disclosed method, the image is segmented into regions with homogeneous color, those regions are then modeled using the so-called dichromatic reflection model, and the illuminant of this scene is found by convergence of lines of the reflection model of the regions. This method relies on the presence of regions with homogeneous color.

In the patent US7688468 (CANON), is disclosed a method of compensating the color differences between initial color data and final color data that has been observed under initial and final illuminant, respectively. For color compensation, the principle of chromatic adaptation transform is applied. But the method relies in the knowledge of initial and final illuminants.

Summary of invention

For the compensation of color differences between a first image of a scene and a second image of the same scene, a first step of the method according to the invention would be to associate the first image to a first illuminant - assuming that this first image shows a scene under this first illuminant - and the second image of the same scene to a second illuminant - assuming that this second image shows the same scene under this second illuminant.

A second step of the method according to the invention would be to compensate the color differences between these two different images of a same scene in a way how the human visual system would compensate when looking at this scene with different illuminants. This compensation step by its own is known to be a chromatic adaptation transform (CAT).

A third step more specific to the method according the invention is to determine the first and second illuminants associated respectively to the first and second image of the same scene by a search within a fixed set of Q possible illuminants for this scene. A number $\binom{Q}{2} = \frac{Q!}{(Q-2)!}$ of combinations of two illuminants is tested and the best combination of illuminants having the smallest compensation error is retained as first and second illuminants respectively for the first image and for the second image of the same scene. According to the invention, the chromatic adaptation transform (CAT) that is specifically adapted for the color compensation between the two illuminants of this best combination is used as color mapping operator to compensate the color differences between the first and the second images.

More precisely, the subject of the invention is a method for compensating color differences between a first image of a scene and a second image of the same scene, the colors of each image being represented by tristimulus values in a LMS color space, a set of $\binom{Q}{2} = \frac{Q!}{(Q-2)!}$ possible combinations of two different illuminants out of Q given illuminants being defined,

for each combination of a first and second illuminants, a chromatic adaptation matrix being calculated in order to compensate, in said LMS color space, the color of any sample object of said scene as perceived under said first illuminant into a color of the same sample object as perceived under said second illuminant,

said method comprising the steps of:

- for each combination of a first and second illuminants, applying its corresponding chromatic adaptation matrix to the colors of said first image such as to obtain chromatic adapted colors forming a chromatic adapted image and calculating the difference between the colors of the second image and the chromatic adapted colors of this chromatic adapted image,
- retaining the combination of first and second illuminants for which the corresponding calculated difference is the smallest,
- compensating said color differences by applying the chromatic adaptation matrix corresponding to said retained combination to the colors of said first image.

When the colors of the first image and second images are provided in other color spaces, as in a RGB color space or XYZ color space, they are converted in a manner known per se in tristimulus values expressed in the LMS color space, before being color compensated according to the method of the invention. Similarly, after such color compensation, they are converted back from the LMS color space into the other original color space. Such conversion may require known spectral sharpening means such as the Bradford spectral sharpening transform (see above).

Preferably, the LMS color space is the CAT02 LMS space. CAT02 LMS space is a "spectrally sharpened" LMS color space. Any LMS color space that is spectrally sharpened can be used alternatively, preferably those generating tristimulus values of colors from spectral densities that overlap as less as possible such as to get small or even null correlation between these tristimulus values.

Preferably, the first and second images have a semantically common content. The content can be considered as semantically common for instance if both images show same objects, even under different points of view or at different times between which some common objects may have moved.

The subject of the invention is also a method for compensating color differences between a first image of a scene and a second image of the same scene,

wherein a set of $M = \binom{Q}{2} = \frac{Q!}{(Q-2)!}$ combinations of two different illuminants out of Q given illuminants is defined,

wherein, for each combination of a first and second illuminants of said set, a chromatic adaptation transform is given such that, when applied to the color of an object of said scene as perceived under said first illuminant, this color is transformed into a chromatic adapted color being the color of the same object but as perceived under said second illuminant,

said method comprising:

- applying each of said chromatic adaptation transforms to the colors of said first image such as to obtain chromatic adapted colors forming a corresponding chromatic adapted first image and calculating a corresponding global color difference between the colors of the second image and the chromatic adapted colors of this chromatic adapted first image,
- retaining the combination of first and second illuminants for which the corresponding calculated global color difference is the smallest,
- compensating said color differences by applying the chromatic adaptation transform corresponding to said retained combination to the colors of said first image, resulting into a color compensated first image.

Preferably, the colors of each image are represented by tristimulus values in a color space and each chromatic adaptation transform related to a combination is a chromatic adaptation matrix such that, when applied to the tristimulus values representing, into said color space, the color of an object of said scene as perceived under the first illuminant of said combination, these tristimulus values are transformed into tristimulus values representing the color of the same object but as perceived under the second illuminant of said combination. Preferably, said color space (LMS) is the CAT02 LMS space.

Preferably, color correspondences between the first image and the second image are determined and said global color difference between the colors of the second image and the chromatic adapted colors of the chromatic adapted first image is calculated as a quadratic sum of the color distances between colors that correspond one to another in the first and the second image, wherein said sum is calculated over all color correspondences over the two images.

Such distances are preferably computed in *CIELAB* color space.

A subject of the invention is also a device for compensating color differences between a first image of a scene and a second image of the same scene,

wherein a set of $M = \begin{pmatrix} Q \\ 2 \end{pmatrix} = \dfrac{Q!}{(Q-2)!}$ possible combinations of two different illuminants out of Q given illuminants is defined,

wherein, for each combination of a first and second illuminants of said set, a chromatic adaptation transform is given such that, when applied to the color of an object of said scene as perceived under said first illuminant, this color is transformed into a chromatic adapted color being the color of the same object but as perceived under said second illuminant,

said device comprising:

- a first module configured for applying each of said chromatic adaptation transform to the colors of said first image such as to obtain chromatic adapted colors forming a corresponding chromatic adapted first image and configured for calculating a corresponding global color difference between the colors of the second image and the chromatic adapted colors of this chromatic adapted first image,
- a second module configured for retaining, among said combinations of said set, the combination of first and second illuminants for which the corresponding calculated global color difference is the smallest, and
- a third module configured for compensating said color differences by applying the chromatic adaptation transform corresponding to said retained combination to the colors of said first image, resulting into a color compensated first image.

Brief description of drawings

The invention will be more clearly understood on reading the description which follows, given by way of non-limiting example, and with reference to the appended figures in which:

- figure 1 is a flowchart illustrating a main embodiment of the method according to the invention;
- figure 2 illustrates a device adapted to implement the main embodiment of figure 1.

Description of embodiments

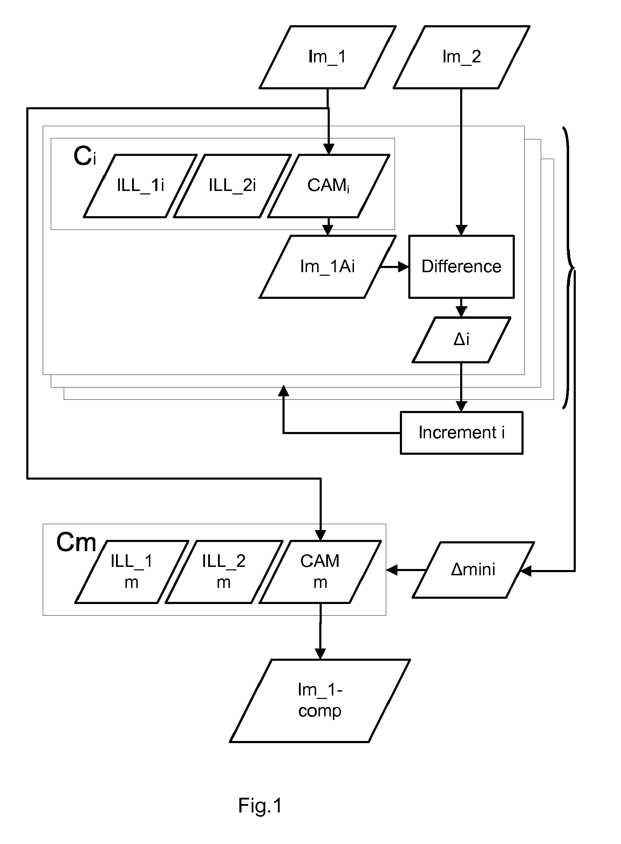

According to a **general embodiment** illustrated on figure 1, the color compensating method of the invention compensates color differences between a first image Im_1 and a second image Im_2.

If the colors of these both images are represented by device dependent color coordinates, these device-dependent color coordinates of both images are transformed in a manner known per se into device-independent color coordinates in the XYZ color space using for instance given color characterization profiles, the colors of the first image then being represented by first XYZ coordinates and the colors of the second image being represented by second XYZ coordinates.

Then, the compensation from the first to the second XYZ color coordinates is done according to a non-limiting embodiment of the invention using the following steps :

1. Transforming the first XYZ color coordinates of colors of the first image Im_1 into first LMS color coordinates using a given spectral sharpening matrix such that the first LMS color coordinates of these colors can be assumed to correspond to narrower spectral fractions such as to be less correlated than the first XYZ coordinates of these colors;

2. Similarly, transforming the second XYZ color coordinates of colors of the second image Im_2 into second LMS color coordinates using a given spectral sharpening matrix such that the second LMS color coordinates of these colors can be assumed to correspond to narrower spectral fractions such as to be less correlated than the second XYZ coordinates of these colors;

3. Building a set of $M = \binom{Q}{2} = \dfrac{Q!}{(Q-2)!}$ possible combinations $C_0$, $C_1$, ...., $C_i$, ...$C_{M-1}$ of two different illuminants out of Q given illuminants, with $0 \leq i < M-1$, each combination $C_i$ having a first illuminant ILL_1i associated with the first image Im_1 and a second illuminant ILL_2i associated with the second image Im_2;

4. For each combination $C_i$ of two illuminants ILL_1i, ILL_2i, calculating a chromatic adaptation matrix $CAM_i$, resulting into a set of M chromatic adaptation matrices;

5. For each chromatic adaptation matrix $CAM_i$ out of the set of M chromatic adaptation matrices, color compensating the first LMS color coordinates representing the colors of the first image Im_1 under illuminant ILL_1i by applying said chromatic adaptation matrix $CAM_i$ to said first LMS color coordinates, resulting into chromatic-adapted mapped first LMS color coordinates, representing colors of the first image Im_1 but under illuminant ILL_2i. These colors result in a chromatic adapted image Im_1Ai.

6. For each resulting chromatic-adapted image Im_1Ai corresponding to a chromatic adaptation matrix $CAM_i$ out of the set of M chromatic adaptation matrices, calculating the difference between chromatic-adapted mapped first LMS color coordinates and second LMS color coordinates, such that this difference represents a global color distance between the chromatic-adapted image Im_1Ai and the second image Im_2.

7. Retaining the best chromatic adapted mapping operator $CAM_m$ generating the smallest difference.

A preferred embodiment for the calculation of a global color distance between the chromatic adapted image Im_1Ai and the second image Im_2 will now be described.

Color correspondences being determined in a manner known per se between the first image Im_1 and the second image Im_2, the global color distance between the two images is preferably computed as a quadratic sum of the color distances between colors that correspond one to another in the chromatic-adapted first image Im_1Ai and in the second image Im_2.

$$global\_color\_dis\tan ce = \sum (Lab - CAT_i * L'a'b')^2$$

wherein the sum $\sum$ is calculated over all color correspondences over the two images.

Such distances are preferably computed in the *CIELAB* color space. In the equation above, Lab are the CIELAB coordinates of a color in the second image Im_2 and L'a'b' are the CIELAB color coordinates of a corresponding color in the first image Im_1A.

In a preferred variation of this embodiment, the given spectral sharpening uses the Bradford spectral sharpening transform.

The invention may have notably the following advantages over existing and known methods:

1. It does not require the measurement of objects with known colors ("color chips" or "color standards")
2. It does not require the presence of regions with homogeneous color in the image.
3. It does not require the knowledge about the illuminants under which the images were acquired.

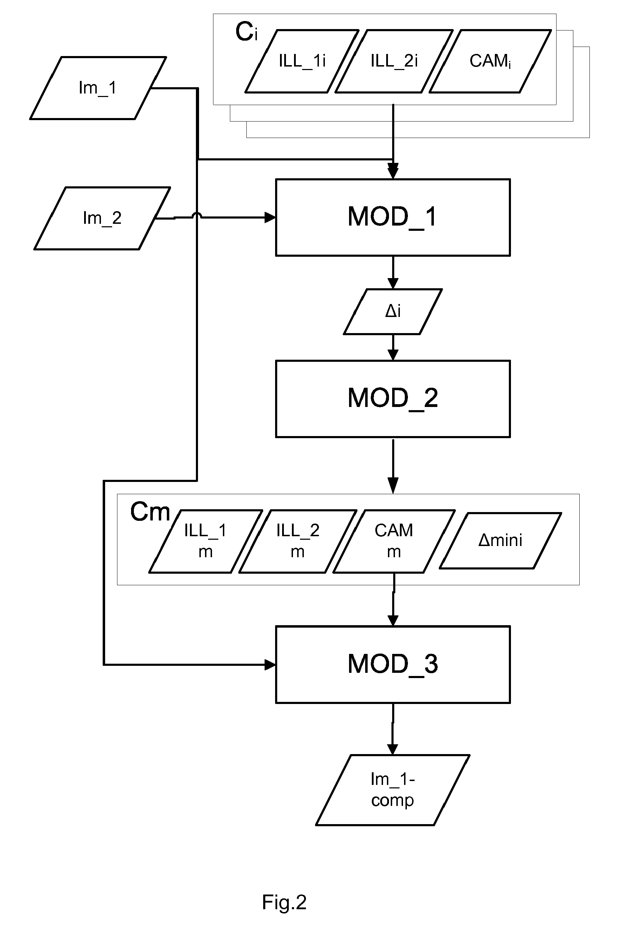

The steps above of the various elements of the invention may be provided through the use of dedicated hardware as well as hardware capable of executing software in association with appropriate software. The hardware may notably include, without limitation, digital signal processor ("DSP") hardware, read-only memory ("ROM") for storing software, random access memory ("RAM"), and non-volatile storage. Such a hardware and software preferably comprises, in reference to figure 2 :

- a first module MOD_1 configured for applying each $CAM_i$ of the set of M chromatic adaptation matrices to the colors of the first image Im_1 such as to obtain chromatic adapted colors forming a corresponding chromatic adapted first image Im_1Ai and configured for calculating a corresponding global color difference $\Delta i$ between the colors of the second image Im_2 and the chromatic adapted colors of this chromatic adapted first image Im_1Ai,
- a second module MOD_2 configured for retaining, among the combinations of the set of M combinations, the combination $C_m$ of first and second illuminants ILL_1m, ILL_2m for which the corresponding calculated global color difference is the smallest $\Delta$mini, and
- a third module MOD_3 configured for applying the chromatic adaptation matrix $CAM_m$ corresponding to the retained combination $C_m$ to the colors of said first image (Im_1), resulting into a color compensated first image (Im_1-comp).

Another **specific embodiment** of the method according to the invention will now be described.

The color compensating method of the invention aims to compensate color differences between a first image and a second image. In other applications it might be requested to do this for parts of images only or to do this for several image pairs. For the sake of simplicity of the below description, we will restrict in the following to the case of compensating color differences between a first image and a second image.

We start from two different images of a same scene. The colors of these images are expressed in a RGB color space.

In this implementation, we select first some typical illuminants from our daily life. We select for instance 21 black body illuminants from 2500K to 8500K. This includes CIE standard illuminants such as illuminant A, illuminant D65 etc. We also add another three common fluorescent illuminants: F2, F7 and F11. These Q=24 illuminants are defined by their spectrum and by their XYZ color coordinates. We define $M = \begin{pmatrix} Q \\ 2 \end{pmatrix} = \frac{Q!}{(Q-2)!}$ possible combinations of two different illuminants out of these Q=24 given illuminants, each combination having a first illuminant associated with the first image and a second illuminant associated with the second image.

Now, to compute the chromatic adaptation between the two illuminants of each defined combination of illuminants, we will use below, in this specific embodiment, the chromatic adaption transform of CIE CAM02. See: Moroney, M. D. Fairchild, R. W. Hunt, C. Li, M. R. Luo, and T. Newman, "The ciecam02 color appearance model", in Color and Imaging Conference, vol. 2002, no. 1. Society for Imaging Science and Technology, 2002, pp. 23-27.

For each combination of a first and second illuminants, we build a color mapping operator consisting of the following concatenated steps: transformation of first RGB coordinates into first XYZ coordinates using a color characterization profile, transformation of first XYZ coordinates into first LMS coordinates using a spectral sharpening matrix, application of the chromatic adaptation matrix adapted to transform color as perceived under the first illuminant into color as perceived under the second illuminant, resulting into mapped chromatic-adapted LMS coordinates, transformation of mapped LMS coordinates into mapped XYZ coordinates using the inverse spectral sharpening matrix, transforming the mapped XYZ coordinates into mapped RGB coordinates using the inverse color characterization profile, resulting in a set of M color mapping operators. Therefore, for each combination of a first and second illuminants, a color mapping operator is given such that, when applied to the color of any object of the scene as perceived under the first illuminant, this color is transformed into a chromatic adapted color being the color of the same object but as perceived under the second illuminant. This color mapping operator is then a chromatic adaptation transform.

For example, mapping from illuminant illum11 to illuminant illum2 a set of XYZ coordinates representing, in the XYZ color space, a color of the first image as perceived under this first illuminant illum1 can be achieved by a matrix $M_{illum1 \rightarrow illum2}$ according to the formula 5 below:

$$
\begin{vmatrix} X \\ Y \\ Z \end{vmatrix}_{illum2} = M_{illum1 \rightarrow illum2} \begin{vmatrix} X \\ Y \\ Z \end{vmatrix}_{illum1}
\tag{1}
$$

wherein $M_{illum1 \rightarrow illum2}$ is a CAT matrix-defined in eq. (2), whereas $MCAT02$ in this equation is defined in the article quoted above entitled "The ciecam02 color appearance model".

$$
M_{illum1 \rightarrow illum2} = MCAT02^{-1} \begin{vmatrix} L_{illum2}/L_{illum1} & 0 & 0 \\ 0 & M_{illum2}/M_{illum1} & 0 \\ 0 & 0 & S_{illum2}/S_{illum1} \end{vmatrix} MCAT02
\tag{2}
$$

$$
\begin{vmatrix} L_{illum2} \\ M_{illum2} \\ S_{illum2} \end{vmatrix} = MCAT02 \begin{vmatrix} X_{illum2} \\ Y_{illum2} \\ Z_{illum2} \end{vmatrix} \qquad \begin{vmatrix} L_{illum1} \\ M_{illum1} \\ S_{illum1} \end{vmatrix} = MCAT02 \begin{vmatrix} X_{illum1} \\ Y_{illum1} \\ Z_{illum1} \end{vmatrix}
$$

wherein:

X_{illum1}, Y_{illum1}, and Z_{illum1} are the tristimulus values of the color of illuminant illum1 expressed in the XYZ color space ;
X_{illum2}, Y_{illum2}, and Z_{illum2} are the tristimulus values of the color of illuminant illum2 expressed in the XYZ color space ;
L_{illum1}, M_{illum1}, and S_{illum1} are the tristimulus values of the color of illuminant illum1 expressed in the LMS color space ;
L_{illum2}, M_{illum2}, and S_{illum2} are the tristimulus values of the color of illuminant illum2 expressed in the LMS color space.

Therefore, if we choose Q=24 number of illuminants, the total number of mappings (via CAT matrices such as $M_{illum1 \rightarrow illum2}$) would be $M= \binom{Q}{2} = \frac{Q!}{(Q-2)!}$ . After computing all possible CAT matrices, we add an identity matrix for the case where both views are under the same illuminant. We compute all these matrices in offline.

Color correspondences $RGB_j \leftrightarrow R'G'B'_j$ being given in the RGB color space between the first image and the second image, we now need to find the right CAT matrix that minimizes a global color distance between the mapped chromatic-adapted first image and the second image. In this specific embodiment, this global color distance will be computed as a quadratic sum of the color distance between colors that correspond one to another $RGB_j \leftrightarrow R'G'B'_j$ in the first and the second image. Such a distance can be notably measured in the XYZ color space as shown below.

Since CAT matrices $M_{illum1 \rightarrow illum2}$ above are defined in XYZ color space, the first step here is to convert the color correspondences $RGB_j \leftrightarrow R'G'B'_j$ given in the RGB color space into color correspondences $XYZ_j \leftrightarrow X'Y'Z'_j$ in the XYZ color space. We achieve this by eq. (3) below where we assume that the display device that will be used to reproduce the images is compliant with rec. 709 standard with D65 as adapted white point.

$$XYZ = M_{RGB->XYZ(rec709)}RGB$$
$$X'Y'Z' = M_{RGB->XYZ(rec709)}R'G'B' \tag{3}$$

wherein $M_{RGB \rightarrow XYZ(rec709)}$ is a matrix adapted to transform tristimulus values of a color expressed in the RGB color space into tristimulus values of the same color expressed in the XYZ color space.

Then, we apply all pre-calculated CAT matrices $M_{illum1 \rightarrow illum2}$ expressed in the XYZ color space and pick the one that best minimizes the global color distances or cross-color-channel distance measured in XYZ color space : see eq. (4). Here, $M_{i \rightarrow j}$ is the CAT matrix that maps from illuminant $i$ to illuminant $j$ in the XYZ color space.

$$\min \sum (XYZ - M_{illum\ i \rightarrow illum\ j} * X'Y'Z')^2 \tag{4}$$

wherein the sum $\Sigma$ is calculated over all color correspondences $XYZ_j \leftrightarrow X'Y'Z'_j$ as obtained by the conversion through equation (7) above.

Note that, if $X'Y'Z'$ are the colors of the first image as perceived under illuminant $i$, the colors $M_{illum\ i \rightarrow illum\ j} *X'Y'Z'$ form a mapped chromatic-adapted image which is the same image but perceived under illuminant $j$.

Finally, we apply the pre-calculated CAT matrix, $M_{illum\ i \rightarrow illum\ j}$ that best minimizes the cross-channel color distance in XYZ color space to the colors of the first image to obtain a color-compensated first image that is closed to the second image. The pair of illuminants illuminant i, illuminant j corresponding to this pre-calculated CAT matrix $M_{illum\ i \rightarrow illum\ j}$ represents then a color mapping model between these first and second images.

An alternative to using CAT matrix as described above is to use a matrix with full degree of freedom. For example, let us assume $C^L$ and $C^R$ denote vectors of color coordinates of n colors under two different illuminants, L and R. It means $C^L$, and $C^R$ are nx3 matrices where each column represents an LMS color channel and each row represents color coordinates of a color. Let us also assume $\theta$ to be a 3x3 matrix having nine parameters of the linear model with full degree of freedom. Now, we can estimate $\theta$ by computing the following normal equation:

$$\theta = ((C^L)^T C^L)^{-1}(C^L)^T C^R$$

An alternative implementation for the "spectral sharpening" step above is or instance to transform the data into statistically independent dimensions instead of applying CAT02 or Bradford matrices. For example, one approach could be to use techniques like Principle Component Analysis (PCA), Independent Component Analysis (ICA), or Non-negative Matrix Factorization (NMF) to find the statistically independent dimensions (that implies decorrelation) of the data. The LMS coordinates are the result of these techniques.

An alternative to the previously chosen list of Q=24 typical illuminants is to take mathematically chosen illuminant spectra. For example, in a given range of possible spectra, Q sample spectra are sampled and their XYZ color coordinates are calculated. In another example, we might select a range or a number of correlated color temperatures and create a list of illuminants from that.

It is to be understood that the invention may be implemented in various forms of hardware, software, firmware, special purpose processors, or combinations thereof. The invention may be notably implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Method for compensating color differences between a first image (Im_1) of a scene and a second image (Im_2) of the same scene,

   wherein a set of $M = \binom{Q}{2} = \frac{Q!}{(Q-2)!}$ combinations $(C_0, C_1, ...., C_i, ...C_{M-1})$ of two different illuminants (ILL_1i, ILL_2i) out of Q given illuminants is defined,

   - wherein, for each combination $(C_i)$ of a first and second illuminants (ILL_1i, ILL_2i) of said set, a chromatic adaptation transform $(CAM_i)$ is given such that, when applied to the color of an object of said scene as perceived under said first illuminant (ILL_1i), this color is transformed into a chromatic adapted color being the color of the same object but as perceived under said second illuminant (ILL_12),

   said method comprising:

   - applying each $(CAM_i)$ of said chromatic adaptation transforms to the colors of said first image (Im_1) such as to obtain chromatic adapted colors forming a corresponding chromatic adapted first image (Im_1Ai) and calculating a corresponding global color difference (Δi) between the colors of the second image (Im_2) and the chromatic adapted colors of this chromatic adapted first image (Im_1Ai),
   - retaining the combination $(C_m)$ of first and second illuminants (ILL_1m, ILL_2m) for which the corresponding calculated global color difference is the smallest (Δmini),
   - compensating said color differences by applying the chromatic adaptation transform $(CAM_m)$ corresponding to said retained combination $(C_m)$ to the colors of said first image (Im_1), resulting into a color compensated first image (Im_1-comp).

2. Method for compensating color differences according to claim 1, wherein the colors of each image are represented by tristimulus values in a color space (LMS), wherein each chromatic adaptation transform related to a combination $(C_i)$ of said set is a chromatic adaptation matrix $(CAM_i)$ such that, when applied to the tristimulus values representing, into said color space (LMS), the color of an object of said scene as perceived under the first illuminant (ILL_1i) of said combination $(C_i)$, these tristimulus values are transformed into tristimulus values representing the color of the same object but as perceived under the second illuminant (ILL_12) of said combination $(C_i)$.

3. Method according to claim 1 or 2 wherein said color space (LMS) is the CAT02 LMS space.

4. Method for compensating color differences according to any one of claims 1 to 3, wherein color correspondences between the first image and the second image being determined, said global color difference ($\Delta$i) between the colors of the second image (Im_2) and the chromatic adapted colors of the chromatic adapted first image (Im_1Ai) is calculated as a quadratic sum of the color distances between colors that correspond one to another in the first and the second image, wherein said sum is calculated over all color correspondences over the two images.

5. Device for compensating color differences between a first image (Im_1) of a scene and a second image (Im_2) of the same scene,

wherein a set of $M = \binom{Q}{2} = \dfrac{Q!}{(Q-2)!}$ possible combinations (C_0, C_1, ...., C_i, ...C_{M-1}) of two different illuminants (ILL_1i, ILL_2i) out of Q given illuminants is defined, wherein, for each combination (C_i) of a first and second illuminants (ILL_1i, ILL_2i) of said set, a chromatic adaptation transform (CAM_i) is given such that, when applied to the color of an object of said scene as perceived under said first illuminant (ILL_1i), this color is transformed into a chromatic adapted color being the color of the same object but as perceived under said second illuminant (ILL_12), said device comprising :

- a first module configured for applying each (CAM_i) of said chromatic adaptation transform to the colors of said first image (Im_1) such as to obtain chromatic adapted colors forming a corresponding chromatic adapted first image (Im_1Ai) and configured for calculating a corresponding global color difference ($\Delta$i) between the colors of the second image (Im_2) and the chromatic adapted colors of this chromatic adapted first image (Im_1Ai),
- a second module configured for retaining, among said combinations of said set, the combination (C_m) of first and second illuminants (ILL_1m, ILL_2m) for which the corresponding calculated global color difference is the smallest ($\Delta$mini), and
- a third module configured for compensating said color differences by applying the chromatic adaptation transform (CAM_m) corresponding to said retained combination (C_m) to the colors of said first image (Im_1), resulting into a color compensated first image (Im_1-comp).

Im_1

Im_2

$C_i$

ILL_1i

ILL_2i

$CAM_i$

Im_1Ai → Difference

$\Delta i$

Increment i

Cm

ILL_1 m

ILL_2 m

CAM m

$\Delta$mini

Im_1-comp

Fig.1

Fig.2

Europäisches
Patentamt

European
Patent Office

Office européen
des brevets

# EUROPEAN SEARCH REPORT

**Application Number**

EP 14 30 6471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/201451 A1 (BRYANT ANDREW [US] ET AL) 9 August 2012 (2012-08-09) * paragraphs [0002], [0203] - [0245] * ----- | 1-5 | INV. H04N1/60 |
| Y | US 2001/028736 A1 (PETTIGREW DANIEL [CA] ET AL) 11 October 2001 (2001-10-11) * paragraphs [0007], [0008], [0040] - [0080] * ----- | 1-5 | |
| Y | SUESSTRUNK S E ET AL: "Chromatic adaptation performance of different RGB sensors", PROCEEDINGS OF SPIE, S P I E - INTERNATIONAL SOCIETY FOR OPTICAL ENGINEERING, US, vol. 4300, 1 January 2001 (2001-01-01), pages 172-183, XP002272200, ISSN: 0277-786X, DOI: 10.1117/12.410788 * Sections 2, 3, 5. * ----- | 1-5 | |
| A | HIRAKAWA K ET AL: "Chromatic Adaptation and White-Balance Problem", IMAGE PROCESSING, 2005. ICIP 2005. IEEE INTERNATIONAL CONFERENCE ON, IEEE, PISCATAWAY, NJ, USA,IEEE, vol. 3, 11 September 2005 (2005-09-11), pages 984-987, XP010851558, DOI: 10.1109/ICIP.2005.1530559 ISBN: 978-0-7803-9134-5 * the whole document * ----- | 1-5 | **TECHNICAL FIELDS SEARCHED (IPC)** H04N |
| A | WO 2007/143729 A2 (ADOBE SYSTEMS INC [US]; BORG LARS U [US]) 13 December 2007 (2007-12-13) * page 3, line 12 - page 6, line 9 * ----- | 1-5 | |

-/--

The present search report has been drawn up for all claims

| Place of search | Date of completion of the search | Examiner |
|---|---|---|
| The Hague | 5 March 2015 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 30 6471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEI XU ET AL: "Performance evaluation of color correction approaches for automatic multi-view image and video stitching", 2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA, 13 June 2010 (2010-06-13), pages 263-270, XP031726027, ISBN: 978-1-4244-6984-0 * the whole document * | 1-5 | |
| A | WO 2013/164043 A1 (THOMSON LICENSING [FR]; CENTRE NAT RECH SCIENT [FR]; UNIV JEAN MONNET) 7 November 2013 (2013-11-07) * pages 1-9 * | 1-5 | |

TECHNICAL FIELDS
SEARCHED     (IPC)

The present search report has been drawn up for all claims

| Place of search | Date of completion of the search | Examiner |
|---|---|---|
| The Hague | 5 March 2015 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 001 668 A1**

## ANNEX TO THE EUROPEAN SEARCH REPORT
## ON EUROPEAN PATENT APPLICATION NO.

EP 14 30 6471

05-03-2015

| Patent document cited in search report | | Publication date | Patent family member(s) | | Publication date |
|---|---|---|---|---|---|
| US 2012201451 | A1 | 09-08-2012 | NONE | | |
| US 2001028736 | A1 | 11-10-2001 | GB | 2363020 A | 05-12-2001 |
| | | | US | 2001028736 A1 | 11-10-2001 |
| | | | US | 2004170317 A1 | 02-09-2004 |
| | | | US | 2005041854 A1 | 24-02-2005 |
| WO 2007143729 | A2 | 13-12-2007 | US | 2007285684 A1 | 13-12-2007 |
| | | | WO | 2007143729 A2 | 13-12-2007 |
| WO 2013164043 | A1 | 07-11-2013 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2003164828 A
- US 7362357 B
- US 7068840 B2
- US 7688468 B

### Non-patent literature cited in the description

- The ciecam02 color appearance model. **MORONEY, M. D. FAIRCHILD ; R. W. HUNT ; C. LI ; M. R. LUO ; T. NEWMAN.** Color and Imaging Conference. Society for Imaging Science and Technology, 2002, vol. 2002, 23-27